# EUROPÄISCHE PATENTANMELDUNG

(11) **EP 2 745 700 A1**
(43) Veröffentlichungstag der Anmeldung: **25.06.2014**
(21) Anmeldenummer: 12198077.5
(22) Anmeldetag: 19.12.2012
(51) Int. Cl.: A23G 1/46, A23G 1/00, A23G 1/40

(54) **Verfahren zur Herstellung eines schokoladenhaltigen Erzeugnisses**

(71) Anmelder: Swissmooh AG, 8401 Winterthur (CH)
(72) Erfinder: Rüegg, Peter, 8274 Gottlieben (CH); Leemann, Marcel, 8600 Dübendorf (CH)
(74) Vertreter: Werner, André

(57) **Zusammenfassung**

Die Erfindung betrifft ein Verfahren zur Herstellung eines schokoladenhaltigen Erzeugnisses, aufweisend mindestens folgende Schritte:
a) Mischen der Grundbestandteile gemäss der Rezeptur des schokoladenhaltigen Erzeugnisses zu einer homogenen Masse, wobei die Zutaten keine milchfremden Süssungskomponente aufweisen, dafür mindestens ein Anteil an Laktose beigemischt wird;
b) Walzen dieser homogenen Masse;
cl) Rühren dieser gewalzten homogenen Masse während einer vorgegebenen Zeitdauer unter Einstellung einer maximalen Temperatur der Masse von 55°C.

## Beschreibung

Die vorliegende Erfindung betrifft ein Verfahren zur Herstellung eines schokoladenhaltigen Erzeugnisses nach dem Oberbegriff von Anspruch 1 sowie eine nach dem Verfahren hergestellte Milchschokolade oder Weisse Schokolade oder Milchschokolade-Couverture oder Weisse Couverture oder Weisse Schokoladenfüllung oder Milchschokoladenfüllung oder Gianduja-Haselnussfüllung oder Brotaufstrichmasse.

Die Anforderungen an Schokolade sind jeweils in den nationalen Gesetzgebungen zu Lebensmitteln geregelt. Beispielsweise schreibt die Schweizer Verordnung SR 817.022.101 abhängig von dem Typ der Schokolade definierte Mindestanteile an Zutaten in Massenprozent vor.

Handelsübliche Schokoladen enthalten als Süssungskomponente entweder Zucker in Form von z.B. Saccharose, Glucose oder Zuckeraustausch-Stoffe (kalorigene Süssungsmittel), z.B. mehrwertige Alkohole oder Polydextrose, meist in Kombination mit nicht kalorigenen Süssungsmitteln, wie Aspartam oder Cyclamat.

Eine Aufgabe der vorliegenden Erfindung bestand darin, ein schokoladenhaltiges Erzeugnis herzustellen, welches mit einer alternativen Süssungskomponente gesüsst ist.

Die Aufgabe wird durch die Merkmale des kennzeichnenden Teils von Anspruch 1 gelöst. Weitere Ausführungsformen sind in den abhängigen Ansprüchen dargestellt.

Die Erfindung betrifft Verfahren zur Herstellung eines schokoladenhaltigen Erzeugnisses, aufweisend mindestens folgende Schritte:
a) Mischen der Grundbestandteile gemäss der Rezeptur des schokoladenhaltigen Erzeugnisses zu einer homogenen Masse, wobei die Zutaten keine milchfremden Süssungskomponenten aufweisen, dafür mindestens ein Anteil an Laktose beigemischt wird;
b) Walzen dieser homogenen Masse;
c1) Rühren dieser gewalzten homogenen Masse während einer vorgegebenen Zeitdauer unter Einstellung einer maximalen Temperatur der Masse von 55°C.

Dadurch wird die Herstellung eines schokoladenhaltigen Erzeugnisses ermöglicht, welches mit einer alternativen Süssungskomponente gesüsst ist. Das schokoladenhaltige Erzeugnis ist dabei ausschliesslich mit milcheigenen Bestandteilen gesüsst. Es hat sich gezeigt, dass das Erzeugnis in seiner Textur und in seinem Aussehen allgemein erwünschten Eigenschaften in nichts nachsteht und gleichzeitig weniger süss im Vergleich zu bekannten schokoladenhaltigen Erzeugnissen ist. Weiter hat sich überraschenderweise gezeigt, dass beim erfindungsgemässen Verfahren ein unerwünschtes Verklumpen oder Zusammenbacken durch Wasseraufnahme von stark hygroskopischen Bestandteilen der amorphen Laktose verhindert werden kann, wie die Umwandlung des stark hygroskopischen α-Laktose-Anhydrids zu α-Laktose-Monohydrat. Verklumpte oder zusammengebackene amorphe Laktose-Bestandteile werden beim Genuss des Erzeugnisses im Mund als störende Fremdkörper wahrgenommen. Amorphe Laktose, welche sich aus α-Laktose-Anhydrid und β-Laktose zusammensetzt, entsteht während des Trocknungsvorgangs bei der Herstellung von handelsüblicher kristalliner Laktose mit einem definierten Reinheitsgrad an α-Laktose-Monohydrat von >97% oder bei der Herstellung von teilhydrolysierter Laktose oder bei der Herstellung von nicht hydrolysiertem bzw. teilhydrolysiertem Milchpulver und ist daher über die Grundbestandteile einer für jedes schokoladehaltigen Erzeugnis definierten Rezeptur, in der Mischung gemäss Schritt a) bereits vorhanden. Nebenbestandteile der Rezeptur werden nach Massgabe der Rezeptur unter weiteren Schritten des Verfahrens zugefügt. Im Falle von teilhydrolysierter Laktose sind darin aufgrund der Teilhydrolyse des Disaccharids Laktose zusätzlich zu den oben erwähnten amorphen Laktosebestandteilen D-Galactose und D-Glucose vorhanden. D-Galactose neigt ebenfalls zur Klumpenbildung bzw. zu Verbackungserscheinungen, welche im Mund beim Genuss von solchen schokoladehaltigen Erzeugnissen als unangenehme Fremdkörper wahrgenommen werden. Es hat sich überraschenderweise gezeigt, dass Klumpenbildung bzw. Verbackungserscheinungen der D-Galactose durch das erfindungsgemässe Verfahren verhindert werden kann.

In einer Ausführungsform wird die Maximaltemperatur durch Kühlen eingestellt. Überraschenderweise können dadurch Verklumpungs- bzw. Verbackungserscheinungen verhindert werden.

In einer Ausführungsform wird das Rühren mit einem Rührwerk mit zwei gegenläufig antreibbaren Rührorganen durchgeführt.

Es ist denkbar, das Rühren in einer sogenannten Doppelübeschlagsconche oder mittels einer anderen kühlbaren Conchenvorrichtung durchzuführen. Dabei wird die nach dem Schritt b) erhaltene pulverförmige, gewalzte homogene Masse durch das Rühren Scherkräften ausgesetzt und dadurch erwärmt. Nach etwa zwei Stunden Rühren verflüssigt sich die gewalzte homogene pulverförmige Masse zu einer zähflüssigen Rührmasse. Während des Rührens darf die unter Schritt c1) obengenannte Temperatur von 55°C nicht überschritten werden. Bei Bedarf wird die Rührmasse daher gekühlt, um eine maximale Rührtemperatur von 55°C einzuhalten.

In einer Ausführungsform wird das Rühren über eine Zeitdauer von bis zu 15 Stunden durchgeführt. Dadurch wird ermöglicht, dass ein Grossteil des Wassers, welches aufgrund der Zutatenzusammensetzung in der Rührmasse enthalten ist, unter Einhaltung der Maximaltemperatur von 55°C ausgetragen wird.

In einer Ausführungsform weist das Verfahren ferner folgende Schritte auf:
c2) Verflüssigen der durch Schritt c1) erhaltenen Rührmasse;
d) Temperieren der verflüssigten Rührmasse, wobei die unter Schritt c2) erhaltene verflüssigte Rührmasse unmittelbar im Anschluss an Schritt c2) temperiert wird.

Das Verflüssigen erfolgt dabei unter Zugabe von Kakaobutter. Die Rührmasse wird beim Temperieren zunächst auf 28°C gebracht und danach auf 30°C eingestellt. Falls es die ablauftechnischen Bedingungen vor Ort es erlauben, sollte die homogene Rührmasse unmittelbar im Anschluss an Schritt c2) temperiert werden. Sollte dies nicht möglich sein, so ist es denkbar, die homogene Rührmasse über eine möglichst kurze Zeitspanne zwischenzulagern, z.B. in einem beheizbaren Container. Die Rührmasse ist während der Zwischenlagerung auf einer Temperatur von ca. 50°C zu halten. Die Dauer der Zwischenlagerung sollte nur einige Stunden dauern, z.B. etwa 4 Stunden, um eine unerwünschte Rückkristallisation der Laktose und eine allfällige Wasseraufnahme zu verhindern.

In einer Ausführungsform ist die Laktose mindestens eine der Folgenden:
- Laktose mit einem Reinheitsgrad von >97% an α-Laktose-Monohydrat;
- teilhydrolysierte Laktose;
- Laktose in Form von laktosehaltigem Milchpulver, wobei die im Milchpulver enthaltene Laktose nicht hydrolysiert und/oder teilhydrolysiert ist.

Dadurch kann ein schokoladenhaltiges Erzeugnis bereitgestellt werden, dessen relative Süsskraft zwar weniger stark im Vergleich zu herkömmlichen Erzeugnissen, aus sensorischer Sicht herkömmlichen Schokoladen aber ebenbürtig oder je nach Konsumentenerwartung sogar überlegen ist, da z.B. ein Erzeugnis wie eine Milchschokolade oder Weisse Schokolade als nicht zu süss empfunden wird.

In einer Ausführungsform weist die teilhydrolysierte Laktose eine relative Süsskraft von >0.1 bis 0.5 auf. Dabei weist sowohl die kristalline teilhydrolysierte Laktose wie auch die im teilhydrolysierten Milchpulver enthaltene teilhydrolysierte Laktose eine relative Süsskraft von >0.1 bis 0.5 auf.

Dadurch kann abhängig von dem herzustellenden Erzeugnis, die gewünschte Süssheit des Erzeugnisses eingestellt werden. Die Süssheit wird von jeder Person individuell aufgrund des eigenen, persönlichen Süssheits-Empfindens subjektiv bewertet, weshalb üblicherweise der abstrakte Begriff "Süssheit" einer Süssungskomponente in Form einer Kennzahl, der sog. "relativen Süsskraft" ausgedrückt wird. Damit wird die Süssheit einer Süssungskomponente möglichst objektiv vergleichbar gegenüber einer anderen Süssungskomponente dargestellt. Unter der Kennzahl "relative Süsskraft" ist die Süssheit einer Süssungskomponente im Vergleich zu Saccharose zu verstehen, wobei bei der Süsskraft von Saccharose von einem Wert 1 ausgegangen wird.

Ein weiterer Aspekt der Erfindung betrifft eine Milchschokolade oder Weisse Schokolade, welche nach dem erfindungsgemässen Verfahren zur Herstellung eines schokoladenhaltigen Erzeugnisses hergestellt ist.

In einer Ausführungsform weist die Milchschokolade oder die Weisse Schokolade einen Massenanteil an Laktose zwischen 30% bis 60% auf, vorzugsweise etwa 50%.

In Tabelle 1 ist ein Beispiel für die Zusammensetzung der Zutaten einer erfindungsgemässen Weissen Schokolade dargestellt:

**Tabelle 1: Weisse Schokolade**

| Bezeichnung Zutat | Anteil in kg / Gesamtmenge in kg |
|---|---|
| Teilhydrolysiertes Milchpulver (wobei die relative Süsskraft der darin enthaltenen Laktose 0.5 ist) | 35.0% |
| Vollmilchpulver standardisiert | 9.0% |
| α-Laktose-Monohydrat (mit einer relativen Süsskraft von 0.1) | 21.0% |
| Kakaobutter | 31.5% |
| Eingesottene Butter | 3.0% |
| Sonnenblumenlecithin | 0.48% |
| Aroma (Vanillin) | 0.02% |

Der Massenanteil an Laktose der Weissen Schokolade von Tabelle 1 entspricht dabei etwa 52%.

Das in Tabelle 1 dargestellte standardisierte Vollmilchpulver entspricht einem standardisierten Vollmilchpulver mit einem Fettgehalt von 26%, wobei diese Prozentangabe g pro 100 g entspricht. Es ist aber auch denkbar, ein fettreduziertes Milchpulver (Magermilchpulver) einzusetzen mit einem Fettgehalt von mehr als 0.1% und weniger als 26%. Weiter ist denkbar ein Milchpulver mit erhöhtem Milchfettgehalt von über 26 % einzusetzen.

In Tabelle 2 ist ein Beispiel einer Zusammensetzung der Zutaten einer erfindungsgemässen Milchschokolade dargestellt:

**Tabelle 2: Milchschokolade**

| Bezeichnung Zutat | Anteil in kg/kg |
|---|---|
| Kakaomasse | 9.0% |
| Teilhydrolysiertes Milchpulver (wobei die relative Süsskraft der darin enthaltenen Laktose 0.5 ist) | 62.5% |
| Kakaobutter | 26.0% |
| Eingesottene Butter | 2.0% |
| Sonnenblumenlecithin | 0.3% |
| Vanille | 0.2% |

Der Massenanteil an Laktose der Milchschokolade von Tabelle 1 entspricht dabei etwa 50%.

Das für die Zusammensetzung der schokoladenhaltigen Erzeugnisse gemäss einer der Tabellen 1 oder 2 verwendete teilhydrolysierte Milchpulver enthält ca. 70% teilhydrolysierte Laktose mit einer relativen Süsskraft von 0.5. Der Fettgehalt des teilhydrolsierten Milchpulvers kann dabei wie oben zum standardisierten Vollmilchpulver von Tabelle 1 variieren. Das teilhydrolysierte Milchpulver besteht beispielsweise aus 30% Standard Vollmilchpulver und aus 70% teilhydrolysierter Laktose. Die teilhydrolysierte Laktose kann dabei aus einer Vorstufe bei der Milch-Permeatgewinnung oder Molkenpermeatgewinnung in Form von Milch- oder Molkenpermeat oder aus einer Mischung aus Kondensmilch und Laktosesirup gewonnen werden. Gegebenenfalls wird das Molkenpermeat dabei entsalzt, um einen salzigen Geschmack im schokoladenhaltigen Erzeugnis zu vermeiden. Das handelsüblich erhältliche α-Laktose-Monohydrat mit einem Reinheitsgrad >97% weist eine relative Süsskraft von 0.1 auf.

In einer Ausführungsform wird eine Milchschokoladen-Courverture oder eine Weisse Couverture oder eine Weisse Schokoladenfüllung oder eine Milchschokoladenfüllung oder eine Gianduja-Haselnussfüllung oder ein Brotaufstrichmasse nach dem erfindungsgemässen Verfahren hergestellt.

Ausführungsbeispiele der vorliegenden Erfindung werden nachstehend anhand von Figuren noch näher erläutert. Es zeigt
- Fig. 1: ein erfindungsgemässes Verfahren zur Herstellung einer Weissen Schokolade; und
- Fig. 2: ein erfindungsgemässes Verfahren zur Herstellung einer Milchschokolade.

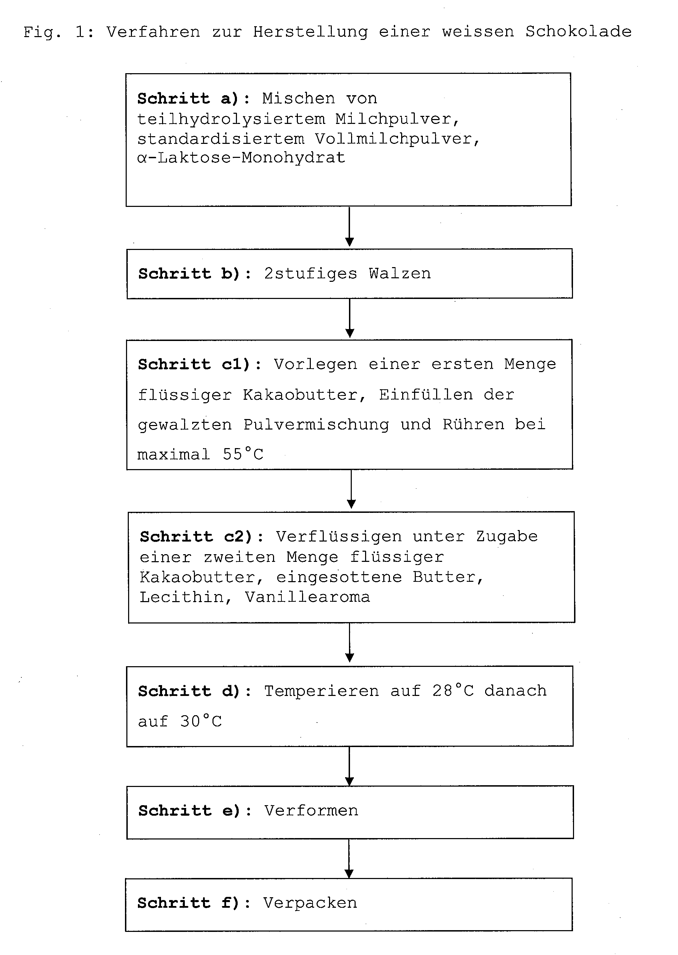

In Figur 1 ist ein erfindungsgemässes Verfahren zur Herstellung einer Weissen Schokolade dargestellt. Die Herstellung von 1000 kg Weisser Schokolade entspricht der Zutatenzusammensetzung obenstehender Tabelle 1, wobei die Zutaten, welche sich aus Grundbestandteilen und Nebenbestandteilen zusammensetzen, nach folgender Rezeptur verarbeitet werden:

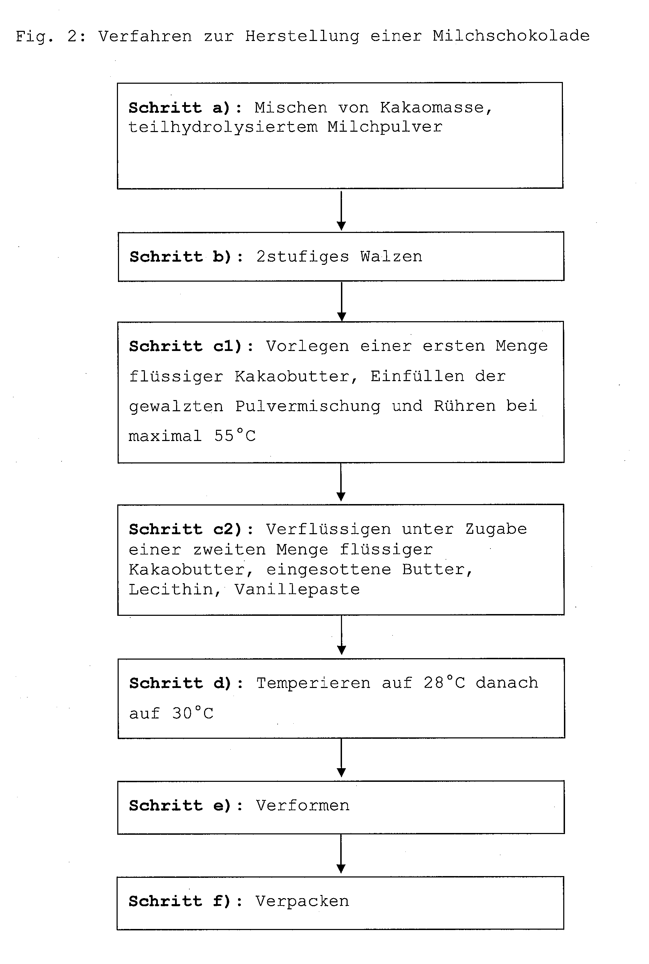

Zunächst werden unter Schritt a) folgende Grundbestandteile der Rezeptur miteinander zu einer homogenen Masse miteinander vermischt: 350 kg teilhydrolysiertes Milchpulver, d.h. Milchpulver mit einem Anteil von 70% teilhydrolysierter Laktose, sowie 90 kg standardisiertes Vollmilchpulver mit normalem milcheigenen Laktosegehalt und 210 kg α-Laktose-Monohydrat sowie 190 kg Kakaobutter. Im Anschluss daran wird unter Schritt b) die Masse gemäss einem herkömmlichen 2-Stufen-Verfahren gewalzt. Nach Durchlaufen der ersten Walzstufe, der sogenannten Vorwalzstufe weist die nun als Walzmasse bezeichnete homogene Masse eine Temperatur von 46°C und eine Feinheit von einer durchschnittlichen Partikelgrösse von 100µm ± 20 µm auf. Nach Durchlaufen der zweiten Walzstufe weist die Walzmasse eine weitere Temperatur von 31°C und eine Feinheit von einer durchschnittlichen Partikelgrösse von 18µm ± 2 µm auf und entspricht einer pulverartigen, gewalzten homogenen Masse. Im Anschluss an Schritt b) wird unter Schritt c1) eine erste Menge von 20 kg an flüssiger Kakaobutter in einen geeigneten Behälter vorgelegt, z.B. in einer Conchenvorrichtung und danach die gewalzte pulverartige Mischung aus Schritt b) in den Behälter eingefüllt und gerührt. Das Rühren erfolgt dabei beispielsweise in einer herkömmlichen Conchiervorrichtung, z.B. in einer sogenannten Doppelüberschlagsconche. Das Rührwerk einer solchen Doppelüberschlagsconche ist ein Rührwerk mit zwei gegenläufig antreibbaren Rührorganen. Es ist aber auch denkbar eine beliebige kühlbare Conchenvorrichtung einzusetzen. Über das Rührwerk wird die gewalzte homogene pulverförmige Masse Scherkräften ausgesetzt, wodurch sich diese erwärmt und etwa nach zwei Stunden zähflüssig wird. Das Rühren der gewalzten homogenen Masse stellt ein Trockenconchieren dar mit dem Unterschied, dass die Walzmasse bzw. das Walzpulver keinesfalls über 55°C erhitzt wird. Die gerührte gewalzte homogene Masse wird nachfolgend als Rührmasse bezeichnet darf maximal eine Temperatur von 55° erreichen. Die Einstellung der Maximaltemperatur von 55°C erfolgt durch Kühlen der gewalzten homogenen Masse. Abhängig von dem eingesetzten Rührwerk bzw. der eingesetzten Conchiervorrichtung wird die Rührmasse bis zu 15 Stunden lang gerührt. Das Rühren unter Schritt c1) dient sowohl bei der Herstellung von Weissen schokoladenhaltigen Erzeugnissen wie auch bei der Herstellung von milchschokoladehaltigen Erzeugnissen (siehe Figur 2) dazu, möglichst viel Wasser aus der Rührmasse auszutragen. Bei milchschokoladenhaltigen Erzeugnissen können dadurch zusätzlich unerwünschte als stechend empfundene Aromakomponenten, die aus der Zutat Kakaomasse stammen ausgetragen werden. Im Anschluss an das Rühren werden der zähflüssigen Rührmasse weitere Nebenbestandteile in Form einer zweiten Menge von 105 kg an flüssiger Kakaobutter, sowie 30 kg eingesottene Butter, 4.8 kg Lecithin, z.B. in Form von Sonnenblumenlecithin und 0.2 kg Vanillearoma beigefügt und homogen eingerührt, was in der Fachsprache üblicherweise als Verflüssigen (siehe Figur 1 unter Schritt c2) bezeichnet wird. Für die Herstellung von Schokoladen mit sehr hohen Fettgehalten kann auf die Zugabe von Lecithin verzichtet werden, wie beispielsweise bei der Herstellung von biologischen Schokoladen oft üblich. Die verflüssigte Rührmasse von 1000 kg weist nun eine dynamische Viskosität von 8000cp ± 1000cp auf. 1000cp entsprechen dabei 1Ns/m² nach SI-System (Internationales Einheitensystem). Die verflüssigte Rührmasse wird nun nach Möglichkeit unmittelbar nach der Verflüssigung aus der Conchiervorrichtung in einen geeigneten Vorlaufbehälter zur Temperiereinrichtung entleert (siehe Figur 1 unter Schritt e): Temperieren). Wenn aus verarbeitungstechnischer Sicht ein Engpass besteht, kann die verflüssigte Rührmasse nach dem Schritt c2) vor Durchführen von Schritt e) für eine kürzere Zeitspanne in einem beheizbaren Container zwischengelagert werden. Die Temperatur der verflüssigten Rührmasse während einer solchen allfälligen Zwischenlagerung soll etwa bei 50°C liegen. Um eine unerwünschte Rückkristallisation der Laktose und eine Wasseraufnahme zu verhindern, soll die Zwischenlagerung nur einige Stunden, z.B. etwa 4 Stunden dauern. In der kontinuierlichen Temperiereinrichtung wird die verflüssigte Rührmasse wird zunächst bis auf eine Temperatur von etwa 28°C abgekühlt, gefolgt von einer leichten Temperaturerhöhung auf 30°C, um unerwünschte Fettkristallstrukturen zu zerstören. Im Anschluss daran wird die temperierte Rührmasse durch Verformen in die gewünschte Form gebracht, z.B. als Schokoladentafeln von 4g bis zu 400g (siehe Figur 1, Schritt e). Im Anschluss daran werden die Erzeugnisse unter Schritt f) verpackt.

In Figur 2 ist ein erfindungsgemässes Verfahren zur Herstellung einer Milchschokolade dargestellt. Das Verfahren von Figur 2 unterscheidet sich zum Verfahren von Figur 1 dadurch, dass die Zutatenzusammensetzung obenstehender Tabelle 2 entspricht und die Zutaten nach folgender Rezeptur verarbeitet werden: Schritt a) Mischen der Grundbestandteile der Zutaten, wobei die Grundbestanteile aus 90 kg Kakaomasse, 625 kg teilhydrolysiertem Milchpulver und 160 kg Kakaobutter bestehen. Diese Grundbestandteile werden zu einer homogenen Masse miteinander vermischt. Unter Schritt c1) wird wie zu Figur 1 beschrieben, 20 kg an flüssiger Kakaobutter in die Conchiervorrichtung vorgelegt und im Anschluss daran die homogene pulverförmige Walzmasse in die Conchiervorrichtung zugegeben. Ein Unterschied zu Figur 1 ist, dass unter Schritt c2) das Verflüssigen unter der Zugabe einer zweiten Menge von 60 kg an flüssiger Kakaobutter sowie 2 kg Vanille und 3 kg Lecithin, z.B. in Form von Sonnenblumenlecithin zugegeben wird. Alternativ zu Vanille kann das Aroma der Rührmasse auch mit handelsüblichem Vanillin eingestellt oder auch ganz auf den Zusatz von Vanille oder anderer Aromen oder aromatisierenden Bestandteilen verzichtet werden. Falls erforderlich kann die nach dem Schritt c2) erhaltene verflüssigte Rührmasse wie bereits zu Figur 1 beschrieben kurz zwischengelagert werden, d.h. wenn die verflüssigte Rührmasse aufgrund ablauftechnischen Gründen nicht unmittelbar nach dem Conchieren temperiert werden kann (siehe Schritt e).

## Patentansprüche

1. Verfahren zur Herstellung eines schokoladenhaltigen Erzeugnisses, aufweisend mindestens folgende Schritte:
a) Mischen der Grundbestandteile gemäss der Rezeptur des schokoladenhaltigen Erzeugnisses zu einer homogenen Masse, wobei die Zutaten keine milchfremden Süssungskomponente aufweisen, dafür mindestens ein Anteil an Laktose beigemischt wird;
b) Walzen dieser homogenen Masse;
c1) Rühren dieser gewalzten homogenen Masse während einer vorgegebenen Zeitdauer unter Einstellung einer maximalen Temperatur der Masse von 55°C.

2. Verfahren zur Herstellung eines schokoladenhaltigen Erzeugnisses nach Anspruch 1, **dadurch gekennzeichnet, dass** die Maximaltemperatur durch Kühlen eingestellt wird.

3. Verfahren zur Herstellung eines schokoladenhaltigen Erzeugnisses nach Anspruch 1 oder Anspruch 2, **dadurch gekennzeichnet, dass** das Rühren mit einem Rührwerk mit zwei gegenläufig antreibbaren Rührorganen durchgeführt wird.

4. Verfahren zur Herstellung eines schokoladenhaltigen Erzeugnisses nach einem der Ansprüche 1 bis 3, **dadurch gekennzeichnet, dass** das Rühren über eine Zeitdauer von bis zu 15 Stunden durchgeführt wird.

5. Verfahren zur Herstellung eines schokoladenhaltigen Erzeugnisses nach einem der Ansprüche 1 bis 4, **dadurch gekennzeichnet, dass** das Verfahren ferner folgende Schritte aufweist:
c2) Verflüssigen der durch Schritt c1) erhaltenen Rührmasse;
d) Temperieren der verflüssigten Rührmasse, wobei die unter Schritt c2) erhaltene verflüssigte Rührmasse unmittelbar im Anschluss an Schritt c2) temperiert wird.

6. Verfahren nach einem der Ansprüche 1 bis 5, **dadurch gekennzeichnet, dass** die Laktose mindestens eine der Folgenden ist:
- Laktose mit einem Reinheitsgrad von >97% an α-Laktose-Monohydrat;
- teilhydrolysierte Laktose;
- Laktose in Form von laktosehaltigem Milchpulver, wobei die im Milchpulver enthaltene Laktose nicht hydrolysiert und/oder teilhydrolysiert ist.

7. Verfahren nach Anspruch 6, **dadurch gekennzeichnet, dass** die teilhydrolysierte Laktose eine relative Süsskraft von >0.1 bis 0.5 aufweist.

8. Milchschokolade oder Weisse Schokolade hergestellt nach einem Verfahren der Ansprüche 1 bis 7.

9. Weisse Schokolade nach Anspruch 8, **dadurch gekennzeichnet, dass** die Milchschokolade oder die Weisse Schokolade einen Massenanteil an Laktose zwischen 30% bis 60% aufweist, vorzugsweise etwa 50%.

10. Milchschokolade-Couverture oder Weisse Couverture oder Weisse Schokoladenfüllung oder Milchschokoladenfüllung oder Gianduja-Haselnussfüllung oder Brotaufstrichmasse, hergestellt nach einem der Ansprüche 1 bis 6 des Verfahrens zur Herstellung eines schokoladenhaltigen Erzeugnisses.
